# FASCICULE DE BREVET EUROPEEN

(11) **EP 4 272 539 B1**
(45) Date de publication et mention de la délivrance du brevet: **01.01.2025**
(21) Numéro de dépôt: 23169003.3
(22) Date de dépôt: 20.04.2023
(51) Int. Cl.: A01D 84/00

(54) **ENGIN COMPORTANT UN SYSTÈME DE RETOURNAGE DE TIGES VÉGÉTALES**
MASCHINE MIT EINEM SYSTEM ZUM RÜCKFÜHREN VON PFLANZENSTANGEN
MACHINE COMPRISING A SYSTEM FOR RETURNING PLANT STEMS

(30) Priorité: 03.05.2022 FR 2204202
(43) Date de publication de la demande: 08.11.2023
(73) Titulaire: N.V. Depoortere, 8791 Beveren-Leie (BE)
(72) Inventeur: DEPOORTERE, Rik, 8909 VLAMERTINGE (BE); LESAGE, Claude, 9000 GENT (BE); WOLFCARIUS, Nico, 8720 DENTERGEM (BE)
(74) Mandataire: Cabinet Beau de Loménie

(56) Documents cités:
- BE-A3- 1 018 164
- CN-A- 106 612 935
- CN-A- 107 114 053
- CN-A- 111 887 013
- FR-A1- 3 111 515
- FR-A1- 3 111 516

## Description

### Domaine Technique

La présente invention concerne un engin de retournage, tracté ou automoteur, pour le retournage de tiges végétales, notamment de lin, se présentant sous la forme d'andains qui sont étalés au sol après le passage de l'arracheuse pour subir l'action du rouissage. La présente invention sera notamment mise en oeuvre par les fabricants de matériels agricoles et trouvera son application dans le domaine de l'agriculture.

### Technique antérieure

Le lin est une plante à fibres. Pour faciliter l'extraction des fibres en vue de leur utilisation notamment dans l'industrie textile, les tiges de lin subissent une opération de rouissage. Cette opération nécessite que lors de la récolte du lin, après l'arrachage des tiges, celles-ci soient déposées sur le sol sous la forme d'andains, consistant en une nappe continue de tiges parallèles entre elles et alignées dans le sens perpendiculaire à l'avancement de la machine d'arrachage. L'andain est laissé sur le champ pendant une durée suffisante pour que les microorganismes, présents dans le sol, réalisent la dégradation biologique des ciments pectiques qui lient les fibres entre elles. Lorsque cette dégradation est suffisante, le lin est ramassé en vue d'être teillé c'est-à-dire d'être traité dans un site industriel pour l'extraction des fibres et leur nettoyage en vue de leur utilisation dans l'industrie textile.

La dégradation biologique dépend des conditions d'humidité et d'ensoleillement auxquelles sont soumises les tiges. On comprend que ces conditions peuvent varier selon que la partie de tige est tournée vers le sol ou vers le ciel. C'est pourquoi on procède en cours de rouissage à une opération consistant à retourner l'andain sur le champ.

Cette opération dite de retournage est réalisée par un engin, automoteur ou tracté qui comporte des moyens de ramassage, aptes à prélever l'andain du sol sous forme d'une nappe continue, des moyens de retournage aptes à retourner sur elle-même ladite nappe ramassée et des moyens d'étalage aptes à étaler sur le sol la nappe ainsi retournée. Un tel engin est par exemple décrit dans les documents FR 2 484 768 et FR 3 111 515.

Cependant, une telle étape de retournage n'est pas toujours satisfaisante pour le traitement de l'andain, notamment en raison de la qualité du sol sur lequel est retourné l'andain.

Ainsi, la présence de pousses d'autres végétaux envahissant les tiges de lin, empêche la prise correcte des tiges de lin qui se retrouvent donc partiellement désorganisées. De même, l'étalage des tiges de lin sur des mauvaises herbes peut faciliter l'engouffrement du vent dans les andains, ce qui constitue également un risque important de désorganisation.

Par ailleurs, l'utilisation de certains produits chimiques tend à être interdite en raison des risques d'inhalation pour les personnels de teillage.

### Exposé de l'invention

La présente invention vise à résoudre les différents problèmes techniques énoncés précédemment. En particulier, la présente invention vise à proposer un engin de retournement permettant d'améliorer l'étape de retournement de l'andain. Plus précisément, la présente invention vise à proposer un engin permettant d'obtenir un andain de meilleure qualité de manière simple et concomitante à l'étape de retournement.

Ainsi, selon un aspect, il est proposé un engin, automoteur ou tracté, comportant un système de retournage de tiges végétales, par exemple d'au moins un andain. Le système de retournage comprend :
- des moyens de ramassage configurés pour prélever les tiges végétales sur le sol sous forme de nappe continue,
- des moyens de retournage configurés pour retourner sur elle-même la nappe ramassée et
- des moyens d'étalage configurés pour étaler sur le sol la nappe retournée, lesdites opérations étant réalisées de manière continue pendant le déplacement de l'engin.

En particulier, l'engin comporte en outre un système de traitement du sol, configuré pour traiter le sol et/ou traiter des plantes, notamment indésirables telles que les adventices ou mauvaises herbes, par exemple désherber, et le système de traitement du sol est configuré pour traiter des plantes et/ou le sol, après le prélèvement des tiges végétales par les moyens de ramassage et avant l'étalage des tiges végétales par le système de retournage.

Ainsi, l'engin profite du soulèvement des tiges végétales, par les moyens de ramassage, pour traiter le sol sous-jacent, avant que les tiges végétales ne soient à nouveau posées dessus par les moyens étalage. Le système de traitement de sol profite donc de la mise à nu du sol pour le traiter, avant le ré-étalage des tiges par-dessus. En particulier, les tiges étant enlevées du sol lors de leur retournement par le système de retournage, le système de traitement du sol a plus de liberté pour traiter le sol, par exemple par des moyens thermiques, sans risquer d'abîmer les tiges de lin. Enfin, le traitement du sol lors de l'étape de retournage permet également d'obtenir un sol de meilleure qualité au moment d'y redéposer les tiges de lin, ce qui permet d'améliorer le traitement de la nappe de tiges, notamment son rouissage.

Préférentiellement, le système de traitement du sol est monté entre les moyens de ramassage et les moyens d'étalage du système de retournage.

Le positionnement du système de traitement du sol, entre les moyens de ramassage et les moyens d'étalage, permet au système de traitement du sol de travailler directement sur le sol, sans déport ou décalage.

Préférentiellement, le système de traitement du sol est positionné en-dessous des moyens de retournage du système de retournage.

Le système de traitement du sol permet de travailler directement le sol, sous la nappe de tiges en cours de retournage. Le système de traitement du sol est donc positionné entre le sol à traiter et les tiges ramassées, ce qui limite, voire évite, les risques d'impact du traitement du sol sur les tiges en cours de retournage.

Préférentiellement, le système de traitement du sol comporte des moyens de désherbage, par exemple mécaniques et/ou chimiques et/ou électriques et/ou thermiques.

Les tiges de la nappe étant retournées à distance du sol pendant le travail du sol par le système de traitement du sol, ce dernier peut donc utiliser librement différents types de moyens de traitement tels que des moyens de désherbage pouvant être mécaniques, chimiques, électriques et/ou thermiques.

Préférentiellement, lesdits moyens de désherbage sont des moyens mécaniques, par exemple : fixes, rotatifs autour d'un axe horizontal transversal au sens de déplacement de l'engin, ou rotatifs autour d'un axe vertical.

Dans le cas de moyens de désherbage mécaniques, ceux-ci peuvent être prévus fixes, ou rotatifs, selon le type de désherbage à effectuer.

Préférentiellement, le système de traitement du sol comprend également des moyens de détection, à la surface du sol, des plantes à traiter.

De tels moyens de détection permettent de limiter les actions de désherbage aux seuls endroits où cela est nécessaire. On limite ainsi l'énergie utilisée pour le traitement, et éventuellement la quantité de produit chimique.

Préférentiellement, les moyens de détection comportent : des moyens d'acquisition d'images, par exemple une ou plusieurs caméras, notamment thermiques, et des moyens d'analyse configurés pour analyser les images fournies par les moyens d'acquisition d'images, les moyens d'analyse étant par exemple basés sur l'intelligence artificielle.

La détection des plantes à traiter peut s'appuyer sur des moyens informatiques, notamment basés sur de l'intelligence artificielle, afin de déterminer le traitement nécessaire et/ou approprié.

Préférentiellement, les moyens de détection sont également configurés pour commander les moyens de désherbage lorsque des plantes à traiter sont détectées.

La détection des plantes à traiter peut s'appuyer sur des moyens informatiques, notamment basés sur de l'intelligence artificielle, afin d'identifier de manière efficace et pertinente les plantes à traiter et, le cas échéant, la méthode de traitement à utiliser.

Préférentiellement, le système de traitement du sol comporte des moyens de tassement du sol, par exemple un rouleau.

Les moyens de tassement du sol permettent d'aplanir le sol avant l'étalage de la nappe de tiges, notamment en cassant des mottes présentes à la surface, ou bien en aplanissant le sol après son traitement par des moyens mécaniques du système de traitement du sol.

Préférentiellement, le système de traitement du sol comporte des moyens de désherbage et des moyens de tassement du sol, et les moyens de tassement du sol sont montés en aval, dans le sens de déplacement de l'engin, des moyens de désherbage.

Dans ce cas, les moyens de tassement sont destinés à ré-aplanir le sol avant l'étalage des tiges, après que celui-ci ait pu être remué par les moyens de désherbage du système de traitement du sol. On obtient donc, en sortie du système de traitement du sol, un sol plan et dépourvu de mauvaises herbes qui est propice à l'étalage des tiges retournées.

Préférentiellement, le système de traitement du sol comporte également un moyen de protection configuré pour former une protection entre le système de traitement du sol et la nappe de tiges végétales, en particulier la nappe ramassée.

Le moyen de protection est destiné à limiter l'impact des moyens du système de traitement du sol sur les tiges en cours de retournage présentes au-dessus dudit système de traitement du sol. Le moyen de protection limite ainsi les éclats, projections ou autres susceptibles de se produire lors du traitement du sol et de venir abîmer les tiges en cours de retournement, voire les moyens de retournage eux-mêmes. Par ailleurs, le moyen de protection peut également être configuré pour limiter le soulèvement de poussières, notamment lorsque le sol est sec. Une telle poussière pourrait venir abîmer, polluer ou réduire la qualité des tiges, et le maintien de la poussière au niveau du système de traitement du sol permet de ne pas interférer sur les tiges en cours de retournage.

Préférentiellement, le moyen de protection comprend un capot disposé sur le dessus du système de traitement du sol.

Le capot forme alors une barrière physique entre le sol en cours de traitement et les tiges en cours de retournage, afin de limiter l'impact du traitement du sol sur lesdites tiges.

Préférentiellement, l'engin comprend en outre une cabine de pilotage et un dispositif de commande, le dispositif de commande étant configuré pour commander le système de traitement depuis la cabine de pilotage.

Afin de pouvoir décider des zones à traiter ou non, le système de traitement du sol peut être commandé depuis une cabine de pilotage, par le conducteur de l'engin par exemple. Ainsi, il peut être décidé spécifiquement des zones à traiter ou à ne pas traiter, depuis la cabine de pilotage, en activant ou en désactivant, le système de traitement du sol.

Préférentiellement, l'engin comporte en outre un moyen de levage, le moyen de levage étant monté sur l'engin et configuré pour soulever ou abaisser le système de traitement par rapport au sol.

Le moyen de levage permet de désactiver le système de traitement facilement, en le surélevant par rapport au sol. Une fois surélevé, le système de traitement peut alors n'avoir plus aucun contact avec le sol et ne pas influer sur le fonctionnement de l'engin ou sur le sol. Au contraire, une fois abaissé, il peut alors traiter et/ou aplanir le sol, selon le souhait de l'utilisateur.

### Brève description des dessins

[Fig. 1] La figure 1 représente de manière schématique un exemple d'engin avec un système de retournage et un système de traitement du sol selon l'invention, pendant le retournage d'une nappe de tige ;
[Fig. 2] La figure 2 représente de manière plus détaillée les systèmes de retournage et de traitement du sol de l'engin de la figure 1, lors du retournage des tiges ;
[Fig. 3] La figure 3 représente les systèmes de retournage et de traitement du sol de la figure 2, pendant le traitement et le tassement du sol ;
[Fig. 4] La figure 4 représente les systèmes de retournage et de traitement du sol de la figure 2, pendant le tassement du sol, et
[Fig. 5] La figure 5 représente les systèmes de retournage et de traitement du sol de la figure 2, avec les moyens de traitement du sol relevés.

### Description des modes de réalisation

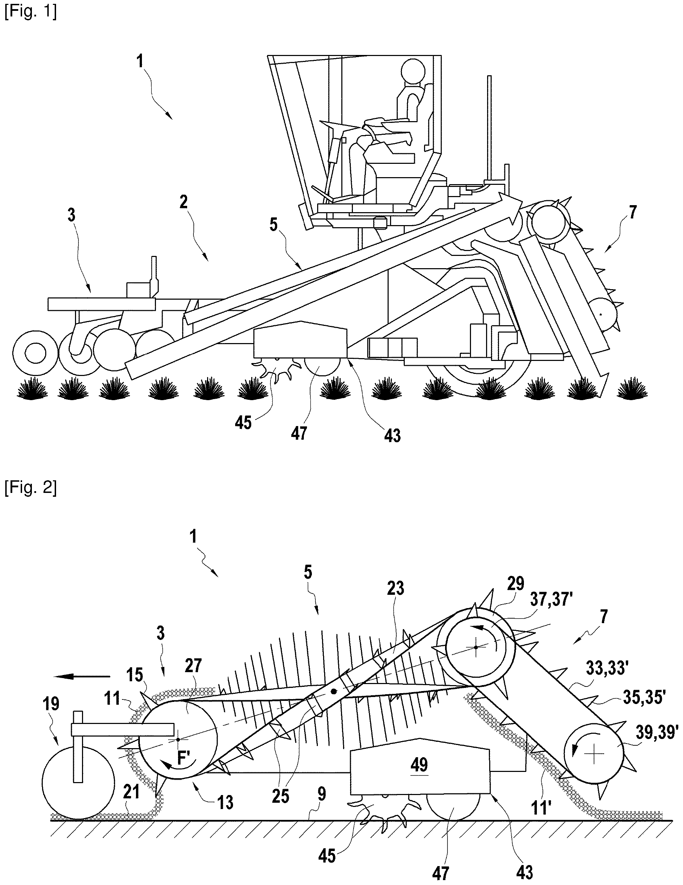

La figure 1 illustre de manière schématique un exemple d'engin 1 avec un système de retournage et un système de traitement du sol selon l'invention.

Tel qu'illustré sur les figures 1 et 2, l'engin 1, automoteur ou tracté, comprend un système de retournage 2 avec, successivement, de l'avant vers l'arrière, des moyens de ramassage 3, des moyens de retournage 5, et des moyens d'étalage 7. Les moyens de ramassage 3 permettent de prélever du sol 9 une nappe continue 11 de tiges constituant l'andain. Les moyens de retournage 5 sont aptes à retourner sur elle-même ladite nappe continue 11, celle-ci effectuant une demi-spirale depuis son prélèvement à l'avant des moyens de ramassage jusqu'à l'arrière desdits moyens de ramassage. Les moyens d'étalage 7 sont aptes à étaler sur le sol 9 la nappe continue retournée 11'. L'ensemble de ces opérations de ramassage, de retournage et d'étalage est réalisé de manière continue pendant le déplacement de l'engin. Selon le mode préférentiel illustré, les moyens de ramassage 3 comportent un pick-up 13 muni de doigts métalliques 15, pouvant être rétractables ou non. Le pick- up 13 tourne sur lui-même dans le sens de la flèche F' contraire au sens de rotation des roues de l'engin 1, de sorte que les doigts métalliques 15, venant en contact avec la nappe continue 11, soulèvent celle-ci et l'entraînent en rotation à la surface comme cela apparaît sur la figure 2. Le pick-up est précédé d'une roue 19 qui lors du déplacement de l'engin 1, vient s'appliquer sur la surface extérieure 21 de la nappe continue 11. Cette roue 19 est réglable en hauteur, et permet de maintenir constant l'écartement entre le pick-up 13 et la nappe continue 11 quelles que soient les irrégularités du sol 9. Selon l'exemple illustré, les moyens de retournage 5 sont constitués par une courroie 23 munie de picots 25, qui est tendue entre un cylindre avant 27 et un cylindre arrière 29. Le cylindre avant 27 est associé au pick-up 13 de telle sorte que la nappe 11 prélevée par les doigts 15 du pick-up soit entraînée sur la courroie 23 par les picots 25. Cette courroie 23 est croisée entre le cylindre avant 27 et le cylindre arrière 29 de sorte que la nappe décrit entre les deux cylindres une demi-spirale au cours de son déplacement de l'avant vers l'arrière. Se faisant, les tiges initialement disposées au niveau du sol sur le dessus de la nappe se retrouvent en-dessous de celle-ci après le retournement et inversement. La courroie croisée présente un brin actif et un brin passif. On entend par brin actif, la partie de la courroie croisée transportant les tiges de lin depuis le cylindre avant 27 jusqu'au cylindre arrière 29 des moyens de retournage 5. Inversement, le brin passif correspond au retour de la courroie croisée à vide depuis le cylindre arrière 29 jusqu'au cylindre avant 27, les tiges de lin ayant été préalablement transférées vers les moyens d'étalage 7. Par ailleurs, les moyens de retournage 5 comportent des éléments mécaniques tels que des fers ronds (non représentés) permettant le support de la nappe 11 pendant son retournement, lorsque celle-ci n'est plus supportée par la courroie à picots. En effet, initialement, la nappe 11 soulevée est entraînée en rotation par les doigts métalliques 15 du pick-up 13, sont ensuite transportés et supportés par la courroie 23 jusqu'à ce que ladite nappe 11 se retourne, celle-ci étant alors supportée par les fers ronds, la courroie 23 à picots 25 permettant uniquement le transport de ladite nappe 11 jusqu'à l'arrière des moyens de retournage 5.

Les moyens d'étalage 7 comprennent, de manière préférentielle, un jeu de deux courroies parallèles 33, 33' munies de picots 35, 35'. Chaque courroie 33, 33' est montée tendue entre un cylindre avant 37, 37' et un cylindre arrière 39, 39'. Le cylindre avant 37, 37' est disposé dans le même axe 41 que le cylindre arrière 27 des moyens de retournage 5. Le cylindre arrière 39, 39' est quant à lui disposé à proximité du sol 9 de manière à ce que la nappe retournée 11', entraînée par les picots 35, 35' qui pénètrent dans la nappe 11', soit étalée sur le sol 9 le plus proche possible de celui-ci de manière à éviter toute perturbation. Tout comme les moyens de retournage 5, les moyens d'étalage 7 comportent également un élément mécanique notamment des fers ronds ou une plaque (non représentée) permettant le support de la nappe retournée 11' lors de son transfert du cylindre avant 37, 37' jusqu'au cylindre arrière 39, 39'.

L'engin 1 comporte également, selon la présente invention, un système de traitement du sol 43 destiné à traiter le sol. Le système de traitement du sol 43 peut ainsi comprendre des moyens de désherbage 45 et/ou des moyens de tassement du sol 47.

Afin de pouvoir traiter le sol sans abîmer l'andain disposé dessus, le système de traitement du sol 43 est monté sur l'engin 1, entre les moyens de ramassage 3 et les moyens d'étalage 7, c'est-à-dire que le système de traitement du sol 43 est positionné sur l'engin 1 de manière à pouvoir traiter le sol au moment où l'andain est soulevé par l'engin 1 pour le retourner. Ainsi, le système de traitement du sol 43 peut être monté sur l'engin 1, en-dessous des moyens de retournage 5, comme illustré sur les figures. Le système de traitement du sol 43 est avantageusement configuré pour traiter une largeur de sol 9 correspondant à la largeur du ou des andains soulevés par l'engin 1 lors de l'étape de retournage.

Le système de traitement du sol 43 peut être relié mécaniquement au pick-up 13, par exemple par une extrémité avant ou par les deux extrémités. La liaison mécanique entre le système de traitement du sol 43 et le pick-up 13 permet alors de déplacer verticalement le système de traitement du sol 43, de manière simultanée avec le pick-up 13, afin de s'adapter aux aspérités de surface du sol 9. Le système de traitement 43 peut alors être toujours à la même distance du sol 9.

Alternativement, le système de traitement du sol 43 peut être monté sur le châssis de l'engin 1, indépendamment du pick-up 13, de manière à pouvoir être positionné verticalement par rapport au sol 9, de manière indépendante à la position verticale du pick-up 13.

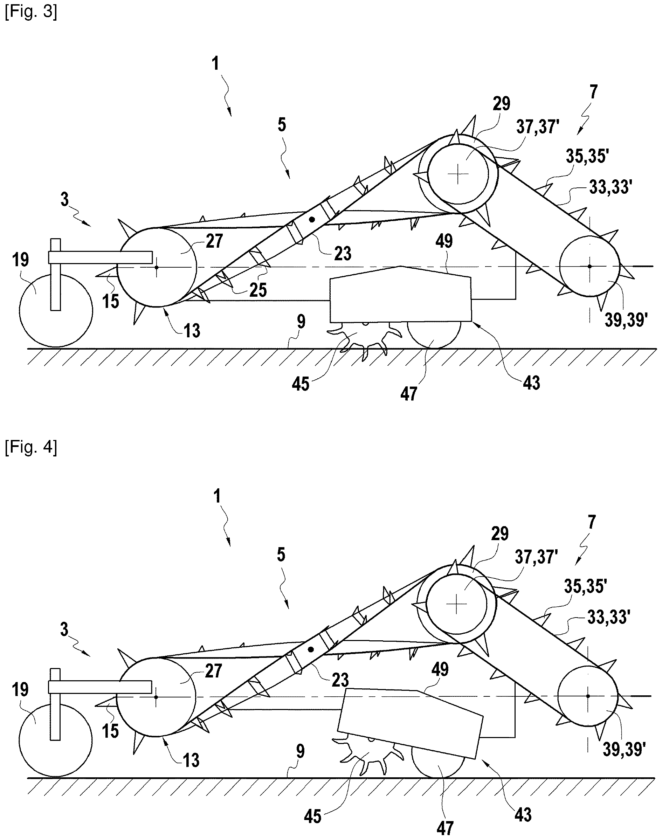

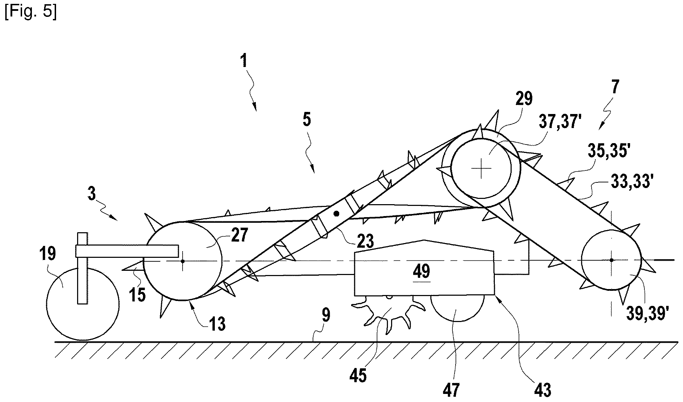

Dans les deux cas décrits précédemment, l'engin 1 peut comprendre un moyen de levage (non représenté), solidaire de l'engin 1 ou du pick-up 13 selon le cas, et sur lequel est monté le système de traitement du sol 43. Le moyen de levage peut ainsi être configuré pour soulever ou abaisser le système de traitement 43 par rapport au sol 9, pour le permettre de travailler ou non le sol. Ainsi, et comme illustré sur les figures 3 et 5, le moyen de levage peut permettre de positionner le système de traitement du sol 43 sur le sol 9 pour lui permettre de travailler, ou au contraire de soulever le dispositif de traitement du sol 43 au-dessus du sol 9 lorsqu'il n'est pas nécessaire de l'utiliser, de manière à limiter la consommation énergétique de l'engin 1, et limiter, le cas échéant, le soulèvement de poussières pendant le retournage des andains.

Il est également possible de prévoir une inclinaison du système de traitement du sol 43, comme illustré à la figure 4, en particulier lorsque celui-ci comporte différents moyens positionnés successivement dans le sens de déplacement de l'engin 1. Dans ce cas, l'inclinaison du système de traitement du sol 43 peut permettre d'utiliser certains moyens de traitement, et pas d'autres, selon les situations.

Le contrôle des moyens de levage, et éventuellement d'inclinaison, du système de traitement du sol 43 peut notamment se faire depuis la cabine de pilotage de l'engin 1, afin de les mettre en oeuvre en même temps que les moyens de désherbage 45 ou de tassement 47 du dispositif de traitement du sol 43.

Le système de traitement du sol 43 peut comporter des moyens de désherbage, par exemple mécaniques et/ou chimiques et/ou électriques et/ou thermiques.

Les moyens de désherbage 45 peuvent être mécaniques, et comprendre, de manière non-limitative : des moyens tractés fixes, tels que des charrues ou canadiens, pour lesquels l'outil reste fixe par rapport au support ; des moyens tractés tournants pour lesquels l'outil est monté rotatif autour d'un axe sensiblement horizontal de manière à rouler sur le sol lors du déplacement de l'engin, afin de limiter la résistance à l'avancement de ce dernier ; et/ou des moyens animés rotatifs, tels que des herses rotatives, entraînés en rotation autour d'un axe sensiblement vertical et pouvant concourir à l'avancement de l'engin 1.

De tels moyens mécaniques de désherbage peuvent notamment être utilisés en continu, pour traiter de manière systématique le sol lors du retournage de l'andain.

Alternativement, il est également possible d'effectuer un tel désherbage mécanique de manière ponctuelle, par exemple en abaissant lesdits moyens mécaniques sur le sol, lorsqu'on souhaite effectuer un tel désherbage, et en remontant lesdits moyens mécaniques sinon.

Les moyens de désherbage 45 peuvent également comprendre des moyens chimiques, par exemple des buses de pulvérisation d'un produit chimique tel qu'un désherbant. De tels moyens chimiques de désherbage peuvent notamment permettre une action localisée, dans le cas d'une buse à projection limitée, ou bien une action globale, dans le cas d'une buse à projection étendue ou dans le cas d'une pluralité de buses. De tels moyens chimiques de désherbage peuvent notamment permettre un traitement localisé du sol, aux seuls endroits présentant des herbes à traiter, afin de limiter la consommation du désherbant.

D'autres moyens de désherbage 45 sont également envisageables, tels que des moyens thermiques de désherbage, ou bien encore des moyens électriques de désherbage, que ce soit de manière ponctuelle, pour traiter uniquement les zones nécessitant un tel traitement, ou au contraire pour traiter de manière systématique le sol, lorsque l'andain n'est plus posé dessus.

Afin de permettre un traitement moins lourd du sol, et limiter la consommation énergétique et/ou en désherbant du système de traitement du sol 43, celui-ci peut comprendre des moyens de détection (non représentés), à la surface du sol, des plantes à traiter. De tels moyens de détection peuvent par exemple comporter des moyens d'acquisition d'images, tels qu'une ou plusieurs caméras, notamment thermiques, et des moyens d'analyse configurés pour analyser les images fournies par les moyens d'acquisition d'images. Les moyens d'analyse peuvent par exemple être basés sur l'intelligence artificielle afin d'identifier, sur les images fournies par les moyens d'acquisition d'images, les plantes ou zones à traiter, et éventuellement le type de traitement à effectuer.

A titre d'exemple, les moyens de détection peuvent être configurés pour identifier et reconnaître les différents types de plantes susceptibles d'être présents sous les andains, et pour déterminer lesquelles traiter et comment.

Enfin, les moyens de détection peuvent également être configurés pour commander les moyens de désherbage 45 lorsque des plantes à traiter sont détectées. Une telle détection et reconnaissance des plantes permettent donc de concentrer les ressources de désherbage de l'engin 1 aux seuls endroits du sol 9 où cela est nécessaire, de manière à ne pas sur-traiter le sol et à ne pas sur-consommer d'énergie ou de désherbant.

Le système de traitement du sol 43 peut également comporter d'autres moyens de traitement que ceux de désherbage, tels que les moyens de tassement du sol 47. Les moyens de tassement 47 peuvent par exemple comprendre un rouleau de tassement montés pivotant autour d'un axe horizontal perpendiculaire à la direction de déplacement de l'engin 1, de manière à venir rouler sur le sol et l'aplanir par tassement ou bien par écrasement de mottes ou autres présents à la surface du sol 9. Avantageusement, les moyens de tassement du sol 47 sont montés en aval, dans le sens de déplacement de l'engin 1, des moyens de désherbage. Les moyen de tassement 47 permettent donc d'améliorer la surface du sol avant d'y redéposer l'andain retourné 11', et notamment de re-aplanir le sol 9 si la surface de celui-ci a été déformée par des moyens de désherbage 45, en particulier mécaniques.

Ici encore, les moyens de détection peuvent être utilisés pour activer les moyens de tassement du sol 47 de manière ponctuelle et localisée, afin de ne pas créer une résistance supplémentaire constante à l'avancement de l'engin 1.

Afin de limiter le soulèvement et/ou la dispersion de poussières lors du travail des différents moyens 45, 47 du système de traitement 43, un moyen de protection, par exemple un capot 49, est monté au-dessus et autour des moyens de désherbage 45 et de tassement 47. Le capot 49 permet alors de confiner les particules et poussières soulevées lors du traitement du sol 9, au niveau du système de traitement du sol 43. Le capot 49 limite notamment la fixation de poussières sur l'andain en cours de retournement.

Avantageusement, en cas d'utilisation d'un moyen de protection tel que le capot 49, les moyens de détection décrits précédemment sont montés à l'extérieur dudit moyen de protection, par exemple dessus, devant, ou bien directement sur l'engin 1, à distance du moyen de protection, afin de ne pas altérer leur fonctionnement.

Ainsi, grâce à l'engin selon la présente invention, il devient facile et efficace de traiter le sol sur lequel repose des andains, en agissant au moment du soulèvement du ou des andains en vue de leur retournement. Les traitements effectués peuvent être localisés et ponctuels, ou au contraire généralisés, sans que cela n'entraîne de dommage sur les andains, qui se retrouvent au-dessus des moyens de traitement du sol au moment de leur action, ni de temps supplémentaire de travail, puisque le traitement s'effectue simultanément au retournage de l'andain.

## Revendications

1. Engin (1), automoteur ou tracté, comportant un système de retournage (2) de tiges végétales, par exemple d'au moins un andain (11), le système de retournage (2) comprenant :
- des moyens de ramassage (3) configurés pour prélever les tiges végétales sur le sol (9) sous forme de nappe continue (11),
- des moyens de retournage (5) configurés pour retourner sur elle-même la nappe ramassée (11) et
- des moyens d'étalage (7) configurés pour étaler sur le sol la nappe retournée (11'), lesdites opérations étant réalisées de manière continue pendant le déplacement de l'engin (1), **caractérisé en ce que** l'engin (1) comporte en outre un système de traitement du sol (43) configuré pour traiter le sol (9) et/ou traiter des plantes, par exemple désherber, et **en ce que** le système de traitement du sol (43) est configuré pour traiter des plantes et/ou le sol, après le prélèvement des tiges végétales par les moyens de ramassage (3) et avant l'étalage des tiges végétales par le système de retournage (2).

2. Engin (1) selon la revendication 1, dans lequel le système de traitement du sol (43) est monté entre les moyens de ramassage (3) et les moyens d'étalage (7) du système de retournage (2).

3. Engin (1) selon la revendication 1 ou 2, dans lequel le système de traitement du sol (43) est positionné en-dessous des moyens de retournage (5) du système de retournage (2).

4. Engin (1) selon l'une quelconque des revendications précédentes, dans lequel le système de traitement du sol (43) comporte des moyens de désherbage (45), par exemple mécaniques et/ou chimiques et/ou électriques et/ou thermiques.

5. Engin (1) selon la revendication précédente, dans lequel lesdits moyens de désherbage (43) sont des moyens mécaniques, par exemple : fixes, rotatifs autour d'un axe horizontal transversal au sens de déplacement de l'engin, ou rotatifs autour d'un axe vertical.

6. Engin (1) selon l'une quelconque des revendications précédentes, dans lequel le système de traitement du sol (43) comprend également des moyens de détection, à la surface du sol, des plantes à traiter.

7. Engin (1) selon la revendication précédente, dans lequel les moyens de détection comportent : des moyens d'acquisition d'images, par exemple une ou plusieurs caméras, notamment thermiques, et des moyens d'analyse configurés pour analyser les images fournies par les moyens d'acquisition d'images, les moyens d'analyse étant par exemple basés sur l'intelligence artificielle.

8. Engin (1) selon la revendication 6 ou 7 en combinaison avec la revendication 4, dans lequel les moyens de détection sont également configurés pour commander les moyens de désherbage (45) lorsque des plantes à traiter sont détectées.

9. Engin (1) selon l'une quelconque des revendications précédentes, dans lequel le système de traitement du sol (43) comporte des moyens de tassement du sol (47), par exemple un rouleau.

10. Engin (1) selon l'une quelconque des revendications précédentes, dans lequel le système de traitement du sol (43) comporte des moyens de désherbage (45) et des moyens de tassement du sol (47), et dans lequel les moyens de tassement du sol (47) sont montés en aval, dans le sens de déplacement de l'engin (1), des moyens de désherbage (45).

11. Engin (1) selon l'une quelconque des revendications précédentes, dans lequel le système de traitement du sol (43) comporte également un moyen de protection configuré pour former une protection entre le système de traitement du sol (43) et la nappe de tiges végétales, en particulier la nappe ramassée (11).

12. Engin (1) selon l'une quelconque des revendications précédentes, dans lequel le moyen de protection comprend un capot (49) disposé sur le dessus du système de traitement du sol (43).

13. Engin (1) selon l'une quelconque des revendications précédentes, comprenant en outre une cabine de pilotage et un dispositif de commande, le dispositif de commande étant configuré pour commander le système de traitement (43) depuis la cabine de pilotage.

14. Engin (1) selon l'une quelconque des revendications précédentes, comportant en outre un moyen de levage, le moyen de levage étant monté sur l'engin (1) et configuré pour soulever ou abaisser le système de traitement (43) par rapport au sol (9).

## Patentansprüche

1. Maschine (1), motorgetrieben oder geschleppt, umfassend ein System zum Rückführen (2) von Pflanzenstängeln, z. B. mindestens einer Schwade (11), wobei das System zum Rückführen (2) Folgendes umfasst:
- Mittel zum Sammeln (3), die konfiguriert sind, um die Pflanzenstängel auf dem Boden (9) in Form einem endlosen Schicht (11) aufzunehmen,
- Mittel zum Rückführen (5), die konfiguriert sind, um die gesammelte Schicht (11) auf sich selbst rückzuführen, und
- Mittel zum Ausbreiten (7), die konfiguriert sind, um die rückgeführte Schicht (11') auf dem Boden auszubreiten,
wobei die Vorgänge auf endlose Weise während der Fortbewegung der Maschine (1) durchgeführt werden,
**dadurch gekennzeichnet, dass** die Maschine (1) außerdem ein System zur Behandlung des Bodens (43) umfasst, das konfiguriert ist, um den Boden (9) zu behandeln und/oder Pflanzen zu behandeln, z. B. Unkraut zu jäten, und dadurch, dass das System zur Behandlung des Bodens (43) konfiguriert ist, um Pflanzen und/oder den Boden nach dem Aufnehmen der Pflanzenstängel durch die Mittel zum Sammeln (3) und vor dem Ausbreiten der Pflanzenstängel durch das System zum Rückführen (2) zu behandeln.

2. Maschine (1) nach Anspruch 1, wobei das System zur Behandlung des Bodens (43) zwischen den Mitteln zum Sammeln (3) und den Mitteln zum Ausbreiten (7) des Systems zum Rückführen (2) montiert ist.

3. Maschine (1) nach Anspruch 1 oder 2, wobei das System zur Behandlung des Bodens (43) unter Mitteln zum Rückführen (5) des Systems zum Rückführen (2) positioniert ist.

4. Maschine (1) nach einem der vorhergehenden Ansprüche, wobei das System zur Behandlung des Bodens (43) Mittel zum Unkraut jäten (45) umfasst, z. B. mechanische und/oder chemische und/oder elektrische und/oder thermische Mittel.

5. Maschine (1) nach dem vorhergehenden Anspruch, wobei die Mittel zum Unkraut jäten (43) mechanische Mittel sind, z. B.: fest, drehend um eine horizontale Querachse in der Fortbewegungsrichtung der Maschine oder drehend um eine vertikale Achse.

6. Maschine (1) nach einem der vorhergehenden Ansprüche, wobei das System zur Behandlung des Bodens (43) auch Mittel zum Nachweis, auf der Oberfläche des Bodens, von zu behandelnden Pflanzen umfasst.

7. Maschine (1) nach dem vorhergehenden Anspruch, wobei die Mittel zum Nachweis Folgendes umfassen: Mittel zur Aufnahme von Bildern, z. B. eine oder mehrere Kameras, insbesondere thermische Kameras, und Mittel zur Analyse, die konfiguriert sind, um die von den Mitteln zur Aufnahme von Bildern gelieferten Bilder zu analysieren, wobei die Mittel zur Analyse z. B. auf künstlicher Intelligenz basieren.

8. Maschine (1) nach Anspruch 6 oder 7 in Kombination mit Anspruch 4, wobei die Mittel zum Nachweis auch konfiguriert sind, um die Mittel zum Unkraut jäten (45) zu steuern, wenn zu behandelnde Pflanzen nachgewiesen werden.

9. Maschine (1) nach einem der vorhergehenden Ansprüche, wobei das System zur Behandlung des Bodens (43) Mittel zur Bodenverdichtung (47) umfasst, z. B. eine Walze.

10. Maschine (1) nach einem der vorhergehenden Ansprüche, wobei das System zur Behandlung des Bodens (43) Mittel zum Unkraut jäten (45) und Mittel zur Bodenverdichtung (47) umfasst, und wobei die Mittel zur Bodenverdichtung (47) nachgelagert in der Fortbewegungsrichtung der Maschine (1) von den Mitteln zum Unkraut jäten (45) montiert sind.

11. Maschine (1) nach einem der vorhergehenden Ansprüche, wobei das System zur Behandlung des Bodens (43) auch ein Schutzmittel umfasst, das konfiguriert ist, um einen Schutz zwischen dem System zur Behandlung des Bodens (43) und der Schicht von Pflanzenstengeln zu bilden, insbesondere der gesammelten Schicht (11).

12. Maschine (1) nach einem der vorhergehenden Ansprüche, wobei das Schutzmittel eine Haube (49) umfasst, die über dem System zur Behandlung des Bodens (43) angeordnet ist.

13. Maschine (1) nach einem der vorhergehenden Ansprüche, umfassend außerdem eine Steuerkabine und eine Steuervorrichtung, wobei die Steuervorrichtung konfiguriert ist, um das System zur Behandlung (43) von der Steuerkabine aus zu steuern.

14. Maschine (1) nach einem der vorhergehenden Ansprüche, umfassend außerdem ein Hebemittel, wobei das Hebemittel auf der Maschine (1) montiert und konfiguriert ist, um das System zur Behandlung (43) mit Bezug auf den Boden (9) anzuheben oder abzusenken.

## Claims

1. A machine (1), either self-propelled or towed, including a system for turning over (2) plant stems, e.g. of at least one swath (11),
the system for turning over (2) comprising
- means of picking-up (3) configured to collect the plant stems from the ground (9) in the form of a continuous mat (11),
- means of turning over (5) configured to turn over the picked-up mat (11) and
- means of spreading (7) configured to spread the turned-over mat (11') over the ground,
said operations being carried out continuously during the movement of the machine (1), **characterized in that** the machine (1) further comprises a soil treatment system (43) configured to treat the soil (9) and/or to treat plants, e.g. to weed,
and **in that** the soil treatment system (43) is configured to treat plants and/or the soil, after collecting the plant stems by the means of picking-up (3) and before spreading the plant stems by the system for turning over (2).

2. The machine (1) according to claim 1, wherein the soil treatment system (43) is mounted between the means of picking-up (3) and the means of spreading (7) of the system for turning over (2).

3. The machine (1) according to claim 1 or 2, wherein the soil treatment system (43) is positioned below the means of turning over (5) of the system for turning over (2).

4. The machine (1) according to any of the preceding claims, wherein the soil treatment system (43) includes weeding means (45), e.g. mechanical and/or chemical and/or electrical and/or thermal weeding means.

5. The machine (1) according to the preceding claim, wherein said weeding means (43) are mechanical means, e.g.: fixed, rotating about a horizontal axis transverse to the direction of travel of the machine, or rotating about a vertical axis.

6. The machine (1) according to any of the preceding claims wherein the soil treatment system (43) also comprises means of detection, at the surface of the soil, of the plants to be treated.

7. The machine (1) according to the preceding claim, wherein the means of detection include: image acquisition means, e.g. one or a plurality of cameras, in particular thermal cameras, and means of analysis configured to analyze the images supplied by the image acquisition means, the means of analysis being e.g. based on artificial intelligence.

8. The engine (1) according to claim 6 or 7 in combination with claim 4, wherein the means of detection are also configured to control the weeding means (45) when plants to be treated are detected.

9. The machine (1) according to any of the preceding claims, wherein the soil treatment system (43) includes soil compaction means (47), e.g. a roller.

10. The machine (1) according to any of the preceding claims wherein the soil treatment system (43) includes weeding means (45) and soil compaction means (47), and wherein the soil compaction means (47) are mounted downstream, along the direction of travel of the machine (1), of the weeding means (45).

11. The machine (1) according to any of the preceding claims, wherein the soil treatment system (43) further includes a means of protection configured to form a protection between the soil treatment system (43) and the mat of plant stems, more particularly the mat (11) picked up.

12. The machine (1) according to any of the preceding claims, wherein the means of protection comprises a cover (49) arranged on the top of the soil treatment system (43).

13. The machine (1) according to any of the preceding claims, further comprising a driving cab and a control device, the control device being configured to control the treatment system (43) from the driving cab.

14. The machine (1) according to any of the preceding claims, further including lifting means, the lifting means being mounted on the machine (1) and configured to raise or lower the treatment system (43) relative to the soil (9).
